(19) Europäisches Patentamt
European Patent Office
Office européen des brevets

(11) Publication number: **0 478 088 B1**

(12) **EUROPEAN PATENT SPECIFICATION**

(45) Date of publication of patent specification: **02.08.95**

(51) Int. Cl.[6]: **C08K 3/32**, C08L 73/00

(21) Application number: **91202500.4**

(22) Date of filing: **25.09.91**

# (54) Polymer compositions.

(30) Priority: **27.09.90 US 588894**
**26.10.90 US 603490**
**31.10.90 US 610286**
**13.11.90 US 612059**
**29.04.91 US 692758**
**20.05.91 US 703067**

(43) Date of publication of application:
**01.04.92 Bulletin 92/14**

(45) Publication of the grant of the patent:
**02.08.95 Bulletin 95/31**

(84) Designated Contracting States:
**AT BE CH DE DK ES FR GB GR IT LI LU NL SE**

(56) References cited:
**EP-A- 0 326 224**
**US-A- 3 948 850**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **George, Eric Richard**
**13703 Overbrook Lane**
**Houston,**
**Texas 77077 (US)**
Inventor: **Coker, James Harold, Jr.**
**1411 Sycamore Lane**
**Kingwood,**
**Texas 77339 (US)**
Inventor: **Slaugh, Lynn Henry**
**11911 Cypresswood Drive**
**Houston,**
**Texas 77070 (US)**
Inventor: **Machado, Joseph Michael**
**2315 Wren Meadow Road**
**Richmond,**
**Texas 77469 (US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

This invention relates to compositions of a linear alternating polymer of carbon monoxide and at least one ethylenically unsaturated compound, and an inorganic additive.

The class of polymers of carbon monoxide and olefins has been known for some time.

More recently, the class of linear alternating polymers of carbon monoxide and at least one ethylenically unsaturated compound, now becoming known as polyketones or polyketone polymers, has become of greater interest partly because of the availability of efficient manufacturing methods.

The polymers are relatively high molecular weight materials having established utility as premium thermoplastics in the production of shaped articles, such as containers for food and drink and parts for the automotive industry, which are produced by processing the polyketone polymer according to well known methods.

In order to mould or process polymers, e.g. by extrusion, it is usually necessary and unavoidable to bring the polymers in a liquefied or molten state. The longer a polymer remains in the molten state, the more it is subject to degradation. Such degradation may be caused by chemical reactions such as chain scission and/or cross-linking. This effect is more pronounced according as the polymer's melting point is higher. The result of the degradation usually is a darkening of the product and/or an increased viscosity. The viscosity may become even so high that the polymer no longer is processable. Most commercial engineering thermoplastics exhibit little or no change in viscosity during melt processing because of the presence of an additive package selected to minimise such a change in properties. For example, US-A-2493597 identifies organic esters of phosphorous acid as melt viscosity stabilisers for polyamides.

Because of their particularly high crystalline melting point, pure CO/ethene copolymer melting at about 260 °C, and because of the presence of many carbonyl groups in their molecule, linear alternating polyketones are relatively susceptible to degradation in the liquefied or molten state. Obviously it is desirable to prolong the time that these polymers remain processable. Thus it is an object of the present invention to provide polymer compositions having improved stability upon being subjected to melt processing conditions. It is another object to provide a process for stabilising a linear alternating polymer of carbon monoxide and at least one ethylenically unsaturated compound, which amounts to, in other words, providing a process for the preparation of compositions having an improved melt processing stability.

It has now been found that adding a certain inorganic compound, namely a hydroxyapatite, has the desired effect on the polymers. It has also been found that adding the hydroxyapatite in quantities larger than needed to obtain a stabilising effect, has a positive influence on the mechanical properties of the polymer.

It may be mentioned that it is known that certain inorganic additives can improve the physical properties of the linear alternating polyketone polymers. Thus it has been proposed to add ceramic or glass fibres or mica to improve the mechanical properties, such as the impact strength or the flexural modulus. It has also been proposed to add zinc or barium borates, or alkaline earth metal carbonates, as flame retardants. However, the positive effect of the present inorganic compounds on the melt stability is novel and surprising, the more so as it is frequently found that metals and metal compounds, often having catalytic activity, destabilise polymers.

Accordingly, the present invention relates to a polymer composition characterized by comprising a linear alternating polymer of carbon monoxide and at least one ethylenically unsaturated compound, and an additive, wherein the additive is a hydroxyapatite.

The polyketone polymers used in the compositions of the invention are of a linear alternating structure and contain substantially one molecule of carbon monoxide for each molecule of unsaturated compound. Suitable compounds are unsaturated carboxylic acids such as acrylic or methacrylic acid and their esters, and hydrocarbons. Suitable ethylenically unsaturated hydrocarbons for use as precursors of the polyketone polymers have up to 20 carbon atoms inclusive, preferably up to 10 carbon atoms, and are aliphatic such as ethene and other $\alpha$-olefins including propene, 1-butene, isobutene, 1-hexene, 1-octene and 1-dodecene, or are arylaliphatic containing an aryl substituent on an otherwise aliphatic molecule, particularly an aryl substituent on a carbon atom of the ethylenic unsaturation. Illustrative of this latter class of ethylenically unsaturated hydrocarbons are styrene, p-methylstyrene, p-ethylstyrene and m-isopropylstyrene. The preferred polyketone polymers are copolymers of carbon monoxide and ethene or terpolymers of carbon monoxide, ethene and a second ethylenically unsaturated hydrocarbon of at least 3 carbon atoms, particularly an $\alpha$-olefin such as propylene.

When the preferred polyketone terpolymers are employed as the major polymeric component of the blends of the invention, there will suitably be within the terpolymer at least 2 units incorporating a moiety of ethylene for each unit incorporating a moiety of the second hydrocarbon. Preferably, there will be from 10

units to 100 units incorporating a moiety of the second hydrocarbon. The polymer chain of the preferred polyketone polymers is therefore represented by the repeating formula

$$-\!\!\left[CO\!\left(CH_2-CH_2\right)\right]_x\!\left[CO\!\left(G\right)\right]_y-$$

wherein G is the moiety of ethylenically unsaturated hydrocarbon of at least 3 carbon atoms polymerized through the ethylenic unsaturation and the ratio of y:x is no more than 0.5. When copolymers of carbon monoxide and ethene are employed in the blends of the invention, there will be no second hydrocarbon present and the copolymers are represented by the above formula wherein y is zero. When y is other than zero, i.e., terpolymers are employed, the $-CO(CH_2CH_2)$ units and the $-CO(G)$ units are found randomly throughout the polymer chain, and preferred ratios of y:x are from 0.01 to 0.1. The end groups or "caps" of the polymer chain will depend upon what materials were present during the production of the polymer and whether or how the polymer was purified. The precise nature of the end groups does not appear to influence the properties of the polymer to any considerable extent so that the polymers are fairly represented by the formula for the polymer chain as depicted above.

Of particular interest are the polyketone polymers of number average molecular weight from 1000 to 200,000, particularly those of number average molecular weight from 20,000 to 90,000 as determined by gel permeation chromatography. The physical properties of the polymer will depend in part upon the molecular weight, whether the polymer is a copolymer or a terpolymer and, in the case of terpolymers, the nature of the proportion of the second hydrocarbon present. Typical melting points for the polymers are from 175 °C to 300 °C, more typically from 210 °C to 270 °C. The polymers have a limiting viscosity number (LVN), measured in m-cresol at 60 °C in a standard capillary viscosity measuring device, from 0.5 dl/g to 10 dl/g, more frequently from 0.8 dl/g to 4 dl/g.

A preferred method for the production of the polyketone polymers is illustrated in U.S.-A-4,843,144.

The stabilized compositions of the invention comprise an intimate mixture of the linear alternating polymer and a hydroxyapatite of the formula $M_{10}(PO_4)_6(OH)_2$, where M is barium (Ba), strontium (Sr), or calcium (Ca). The preferred hydroxyapatite is calcium hydroxyapatite, $Ca_{10}(PO_4)_6(OH)_2$, a naturally occurring calcium phosphate and the major constituent of bone and tooth mineral. It is a finely divided, crystalline, non-stoichiometric material rich in surface ions which are readily replaced by fluoride ions. Calcium hydroxyapatite is also referred to as tribasic calcium phosphate.

The amount of hydroxyapatite present in the compositions of the invention is not critical, as long as a stabilizing quantity is present and other important polymer properties for the intended use are not adversely affected. Suitably the hydroxyapatite is present in a quantity of 0.01 to 70 wt%, based on total composition. The precise amount required for melt stabilization will depend upon a variety of factors, such as the melt temperature, the polymer's LVN, and other additives interactive effects. Compositions containing 0.01 wt% to 5.0 wt% hydroxyapatite exhibit improved melt stability, relative to the unstabilized polymer. Compositions containing 0.01 wt% to 1.0 wt% hydroxyapatite exhibit desirable melt stability, with compositions containing 0.01 wt% to 0.5 wt% hydroxyapatite being preferred.

An additional advantage of the compositions of the present invention is that at higher loadings of hydroxyapatite, reinforced and filled polymer compositions are provided which are melt stabilised. Reinforcing a polymer with a mineral filler is attractive as it usually provides a tougher yet less expensive product, but it sometimes presents the disadvantage of aggravating any melt processing problems that the neat polymer may have. Thus it has been proposed to fill the present polyketone polymers with mica or with calcium carbonate in order to improve the mechanical properties, but this appears to accelerate cross-linking, thereby decreasing the melt stability and limiting the processability of the filled polyketone compositions. Quite surprisingly compositions containing hydroxyapatite as a filler exhibit viscosity levels during processing that are lower than the levels typical for compositions filled with commonly used fillers, and yet exhibit mechanical properties at least equal to those of compositions filled with such commercial fillers.

Thus in a preferred embodiment the present invention relates to a composition in which the hydroxyapatite is present as a filler in a quantity of 15-45 vol%, based on total composition, with amount from 5 to 30 vol% being preferred. On a weight basis, the amount of hydroxyapatite may be greater than 50 wt%, due to its greater density. Suitably the hydroxyapatite is present as a filler in a quantity of 10 to 70 wt%, preferably 30-50 wt%, based on total composition.

It has furthermore been found that even better stabilising results are obtained when the composition according to the invention additionally comprises one or more inorganic or organometallic stabilising compounds. Preferably, such compound(s) is (are) present in a quantity of 0.001-10 wt%, based on total

composition. The additional stabilising compounds are suitably selected from zinc aluminates, alumina hydrogels or decomposition products thereof, cupric chromite and mercaptobenzimidazoles.

If the additional stabilising compound is zinc aluminate, it is preferably present in a quantity of 0.01-5 wt%, particularly 0.05-0.5 wt%, based on total composition. In general, a weight ratio of hydroxyapatite to zinc aluminate of from 1:3 to 3:1 provides acceptable results, with a weight ratio of from 1:2 to 2:1 being preferred, and a ratio of about 1:1 being most preferred.

The zinc aluminate component of the stabilizing mixture is a chemical combination of zinc, aluminium and oxygen that is illustratively produced by coprecipitation of zinc and aluminium hydroxides from a strongly basic solution of zinc and aluminium salts. The combined precipitate is dried and on some occasions is calcined. The resulting product is a chemically combined oxide and/or hydroxide material of variable composition, which qualitatively reflects the proportions of zinc and aluminium in the solution from which the precipitate is formed. The zinc aluminates are generally of the formula $ZnO.Al_2(OH)_3$ or $ZnO.Al_2O_3$.

In a typical preparation, an aqueous mixture of zinc and aluminium salts, e.g., as the nitrates, is added to an aqueous solution rendered basic by the presence of ammonia, an ammonium salt such as ammonium carbonate, or sodium hydroxide. The resulting precipitate is recovered as by filtration and dried at a temperature above 100 °C, e.g., from 110 °C to 120 °C. It is useful on some occasions to complete the drying as by calcination at a higher temperature such as 500 °C. The proportions of zinc and aluminium in the zinc aluminate are qualitatively controlled by varying the relative concentrations of the zinc and aluminium ions in the solution from which the precipitate is formed. The zinc aluminate useful as stabilizer in the compositions of the invention suitably has a mole ratio of $ZnO:Al_2O_3$ of from 1:0.25 to 1:8. Zinc aluminates wherein the mole ratio of $ZnO:Al_2O_3$ is from 1:0.5 to 1:6.5 are preferred.

In an alternative embodiment, the additional component of the stabilising mixture is an alumina hydrogel or aluminium-containing decomposition product thereof. The precise form of the aluminium species present in the final composition will depend upon a number of factors including the degree of moisture in the polymer with which the aluminium hydrogel is mixed, whether or not the composition has been exposed to moisture (as by contact with a humid environment), and the temperature at which and the number of times the composition has been thermally processed. It is known that the alumina hydrogel will lose moisture and form crystalline phases upon aging, such that the hydrogel is transformed, probably to species containing a mixture of aluminium hydrogel and aluminium oxide moieties. At elevated temperatures, thermal decomposition of the alumina hydrogel may occur, and is also considered to give species containing aluminium hydroxyl and oxide moieties. Since the aluminium species is much the same regardless of the type of transformation, the term "decomposition product" when used herein is employed to indicate the aluminium-containing species resulting from any type of alumina hydrogel transformation.

The alumina hydrogel employed in the invention can be represented by the formula $Al_2O_3.nH_2O$ where $O<n<10$. These hydrogels can be prepared by titrating an aqueous solution of one or more aluminium salt(s) with an appropriate acidic or basic material or solution to cause precipitation of the alumina gel. U.S.-A-3,124,418; 3,520,654; and 4,154,812 disclose processes for preparing pure alumina hydrogel.

The alumina hydrogel can be prepared by titrating an acidic aluminium salt such as, aluminium sulfate, aluminium nitrate, or aluminium chloride, in aqueous solution with a basic precipitating medium, such as sodium hydroxide or ammonium hydroxide, or by titrating an alkali metal aluminate, for example sodium aluminate or potassium aluminate, in aqueous solution with an acidic precipitating medium, for example hydrochloric or nitric acid. Adjustment of the pH of an aluminum-containing solution to between 5.5 and 10.0 will result in precipitation of the aluminium as aluminium hydroxide and hydrated aluminium oxide.

The alumina hydrogels usable within the scope of the present invention include aluminium trihydroxides, such as gibbsite or hydrargillite ($\alpha$-alumina trihydrate, $\alpha$-$Al(OH)_3$ or $\alpha$-$Al_2O_3.3\ H_2O$), bayerite ($\beta$-alumina trihydrate, $\beta$-$Al(OH)_3$ or $\beta$-$Al_2O_3.3H_2O$) and nordstrandite (new $\beta$-$Al(OH)_3$). Also included within the class of "alumina hydrogel or decomposition product thereof" are the aluminium oxide hydroxides, including boehmite ($\alpha$-alumina monohydrate, $AlO(OH)$ or $\alpha$-$Al_2O_3.H_2O$) and diaspore ($\beta$-alumina monohydrate, $AlO(OH)$ or $\beta$-$Al_2O_3.H_2O$). Corundum, ($\alpha$-alumina, $Al_2O_3$) is also contemplated within the scope of the phrase "alumina hydrogel or decomposition product thereof."

Bayerite, gibbsite, boehmite, and/or mixtures thereof are preferred hydrogels for use herein, and bayerite is particularly preferred.

The alumina hydrogel or an aluminium containing decomposition product thereof, preferably an aluminium trihydroxide such as bayerite, suitably is present in a quantity of 0.01-10 wt%, based on total composition, with quantities of 0.05-2.0 wt% on the same basis being preferred.

In a third embodiment, the additional component of the stabilising mixture is cupric chromite, a chemical combination of copper, chromium and oxygen that is represented by the formula $CuCr_2O_4$. Cupric

chromite is a grayish-black to black crystalline material that is practically insoluble in water. Cupric chromite may be prepared, for example, by heating cupric chromate $CuCrO_4$, or by decomposing ammonium cupric chromate $(NH_4)_2Cu(CrO_4)_2$. The cupric chromite is suitably provided in an amount of from 0.001 wt% to 0.5 wt%, based on total composition. Compositions containing 0.001-0.05 wt% cupric chromite on the same basis are preferred, especially those containing 0.001-0.005 wt%.

In a fourth embodiment, the additional stabilising compound is a mercaptobenzimidazole. Mercaptobenzimidazoles, also known as mercapto-1,3-benzodiazoles or as mercaptobenzoglyoxalines, may be represented by the formula for 2-mercaptobenzimidazoles:

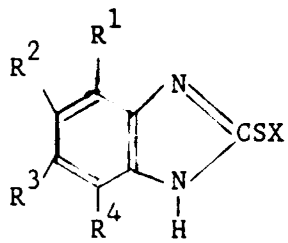

wherein each of $R^1$, $R^2$, $R^3$ and $R^4$ is independently a hydrogen atom or a lower alkyl group of one to four carbon atoms, and X is a hydrogen atom, an alkali metal, or ammonium. A tautomer of the compound of the above formula is also suitable. Particularly preferred are 2-mercaptobenzimidazole, wherein $R^1$, $R^2$, $R^3$, $R^4$ and X are each H; and methyl-2-mercaptobenzimidazole, wherein at least one of $R^1$, $R^2$, $R^3$ or $R^4$ is methyl, and X is H.

The mercaptobenzimidazole is suitably provided in a quantity of 0.001-0.1 wt%, based on total composition. Compositions containing 0.001-0.05 wt% mercaptobenzimidazole on the same basis are preferred.

The invention also relates to a process for the preparation of a composition as defined hereinbefore, characterized in that it comprises forming an intimate mixture of a linear alternating polymer of carbon monoxide and at least one ethylenically unsaturated compound with an additive, wherein the additive is a hydroxyapatite. The forming of the intimate mixture may be carried out using any suitable method, including dry blending of the polymer and stabiliser in a finely divided form, followed by hot pressing or extrusion of the mixture. The composition may also be produced by blending the components in a melt mixing device. Alternatively, the hydroxyapatite can be included with the reactants entering the polymerization reactor, or added to the reactor product slurry prior to pelletization.

The compositions of the invention may also include other additives such as antioxidants, dyes, fillers or reinforcing agents, fire resistant materials, mould release agents, colorants and other materials designed to improve the processability of the polymers or the properties of the resulting blend. Such additives are added prior to, together with, or subsequent to the blending of the polyketone and hydroxyapatite. The presence of these additives may affect the optimum level of hydroxyapatite for a given application.

The compositions are processed by methods such as extrusion and injection moulding into sheets, films, plates and shaped parts. The compositions of the invention are particularly useful for the production of articles by multiple melting/crystallization cycles, and where elevated temperatures are likely to be encountered. Illustrative of such applications are the production of articles useful in both rigid and flexible packaging applications, and in both internal and external parts for automotive use; fibres useful in yarns, tire cord, and fabric; and coatings for a variety of materials.

The invention is further illustrated by the following examples.

EXAMPLES

Throughout the Examples, the following components were used:

Polymer A, a linear alternating terpolymer of carbon monoxide, ethene and propene, having a melting point of 220 °C and an LVN of 1.8 dl/g when measured in m-cresol at 60 °C. The terpolymer also contained two conventional commercially available additives (0.5 wt% of a sterically hindered phenol as a UV stabiliser, and 0.5 wt% of a copolymer of ethylene and acrylic acid as a lubricant).

Polymer B, a linear alternating terpolymer of carbon monoxide, ethene and propene, having a melting point of 220 °C and an LVN of 1.08 dl/g when measured in m-cresol at 60 °C. The terpolymer also contained the same two additives as polymer A, in the same amounts.

Polymer C, a linear alternating terpolymer of carbon monoxide, ethene and propene, having a melting point of 220 °C and an LVN of 1.52 dl/g when measured in m-cresol at 60 °C. The terpolymer also contained two conventional additives (0.2 wt% of the same UV stabiliser as used in polymers A and B, and 0.2 wt% of glycerol monostearate as a lubricant).

Calcium hydroxyapatite, having the formula $Ca_{10}(PO_4)_6(OH)_2$, implying a theoretical mole ratio of 1.67 Ca:P, was obtained commercially.

Zinc aluminate was produced by combining an aqueous solution of commercial grade zinc and aluminium nitrates with an aqueous solution of ammonium carbonate buffered to a pH of 7.5, and maintained at 50 °C. The resulting precipitate was recovered by filtration, washed, dried at approximately 110 °C, and calcined at 500 °C. The resulting zinc aluminate had a mole ratio of 1:5.73 $ZnO:Al_2O_3$. Analysis of the zinc aluminate by plasma emission spectrometry determined that the material contained 44 wt% Al, 9.3 wt% Zn and 0.001 wt% Na.

Bayerite (an alumina trihydrate), cupric chromite and 2-mercaptobenzimidazole were obtained commercially.

## Example 1

A portion of polymer A was ground to particles of 0.25 mm (60 mesh), and then powder-mixed with calcium hydroxyapatite for 5 minutes. Samples containing various concentrations of calcium hydroxyapatite were prepared, as shown in Table 1. The samples were compounded in a 30 mm extruder, operating at 150 rpm with melt temperatures between 230 and 260 °C. The viscosity of each sample was determined over time in the melt in a parallel plate rheometer operating at 275 °C at a frequency of 1 Hz. Table 1 lists the initial melt viscosity and the viscosity after 10 minutes. During commercial processing, polymers are typically in a melt phase for less than 10 minutes.

Table 1

| Calcium Hydroxyapatite (ppm) | Viscosity (Pa. -sec.) | |
|---|---|---|
| | 0 min. | 10 min |
| 0 | 965 | 4820 |
| 41 | 965 | 3300 |
| 410 | 965 | 3600 |
| 2,500 | 965 | 3437 |
| 10,000 | 965 | 2475 |

Addition of the calcium hydroxyapatite at a concentration of 41 ppm reduced the viscosity of the melt phase polymer by 31%, relative to the neat polymer control, after 10 minutes. The sample containing 410 ppm calcium hydroxyapatite also exhibited a lower viscosity, relative to the control, after 10 minutes. Higher concentrations were even more effective at limiting the viscosity increase.

## Example 2

A portion of polymer B was utilized to prepare and test samples containing various concentrations of the same calcium hydroxyapatite and by the same procedure described in Example 1. Table 2 lists the initial melt viscosity and the viscosity after 10 and 28 minutes.

Table 2

| Calcium Hydroxyapatite (wt%) | Viscosity (Pa-sec.) | | |
|---|---|---|---|
| | 0 min | 10 min | 28 min |
| 0 | 80 | 150 | 1400 |
| 0.5 | 80 | 85 | 300 |
| 1.0 | 80 | 85 | 250 |
| 5.0 | 80 | 84 | 210 |

The results demonstrate that the addition of calcium hydroxyapatite can mitigate the viscosity increase that would otherwise occur without the stabilizer. The results indicate a more pronounced viscosity reduction, relative to the control sample, than the samples shown in Example 2. This is due to the lower LVN, and lower molecular weight, of the polymer in this Example.

Example 3

The polyketone terpolymer and the samples described in Example 1 were evaluated in a differential scanning calorimeter (DSC), which employed sealed pan containers. The pan and contents were heated at a controlled rate, typically 20 °C/min, until the sample melted. The pan and contents were then cooled until the sample solidified or partially crystallized. The samples were then heated to 275 °C, maintained at that temperature for 10 minutes, and then cooled again. The holding temperature of 275 °C is typical for commercial melt processing operations. The first and second heats of crystallization ($HC_1$ and $HC_2$) of the samples were determined, in calories per gram, through use of the DSC. The values for $HC_1$ and $HC_2$ for each sample are shown in Table 3.

Table 3

| Hydroxyapatite ppm | $HC_1$ (Cal/g) | $HC_2$ (Cal/g) | $HC_2/HC_1$ |
|---|---|---|---|
| 0 | 16.5 | 10.8 | 0.65 |
| 41 | 17.1 | 12.9 | 0.75 |
| 410 | -- | -- | 0.85 |
| 2,500 | 16.7 | 15.4 | 0.92 |
| 10,000 | 17.2 | 16.3 | 0.95 |

In general, the heat of crystallization for a stabilized polymer will be greater than the corresponding value for an unstabilized polymer. However, the heat of crystallization for a stabilized polymer will decrease over repeated heating/cooling cycles. The heat of crystallization serves as an indication of the amount of crystallinity of the polymer. Degradation of the polymer during heating can inhibit crystallization upon cooling. The ratio of $HC_2$ to $HC_1$ for a given sample serves as a measure of the degree of crystallinity maintained over the two heating cycles. For a polymer exhibiting ideal melt stability (assuming no nucleating effects), this ratio is 1. The $HC_2/HC_1$ ratio for each sample is also shown in Table 3.

The $HC_2/HC_1$ ratios indicate that even a small amount of calcium hydroxyapatite (41 ppm) provided a significant increase in the amount of crystallinity maintained during a second heating/cooling cycle. Higher concentrations were even more effective to maintain crystallinity.

Example 4

The extruded nibs from the processing described in Example 1 were dried overnight, and specimens of the compounded samples were moulded into plaques of 0.76 mm thickness on a 45 g injection moulding machine. The plaques were submitted for oven aging tests.

The test plaques were placed in an oven maintained at 125 °C. Periodically, test plaques were withdrawn and bent over an angle of 180 °C. When the plaque cracked, the time to embrittlement (or failure) was determined as a function of time. All samples exhibited a time to failure of about 10 days, indicating that the calcium hydroxyapatite had no apparent effect on oven aging.

Example 5

Filled compounds were prepared of polymer B and three different fillers: calcium hydroxyapatite, calcium carbonate, and mica. The blends prepared are shown in Table 4.

The blends were compounded in a 30 mm co-rotating twin screw extruder, operating at 100 rpm with a melt temperature of 250 °C. The viscosity of each sample was determined over time in the melt in a parallel plate rheometer operating at 275 °C at a frequency of 1 Hz. Table 4 lists the initial melt viscosity and the viscosity after both 10 and 28 minutes, as well as a ratio of the melt viscosity after 28 minutes to the initial melt viscosity.

Table 4

| Filler | Polyketone wt% (vol%) | Filler wt% (vol%) | Viscosity (Pa-sec) 0 min | 10 min | 28 min | Viscosity Ratio |
|---|---|---|---|---|---|---|
| None | 100 (100) | 0 (0) | 63 | 113 | 1030 | 16 |
| Calcium Hydroxyapatite | 77 (90) | 23 (10) | 225 | 380 | 1080 | 4.8 |
| Calcium Hydroxyapatite | 60 (80) | 40 (20) | 1230 | 2450 | 8960 | 7.3 |
| Calcium Carbonate | 64 (80) | 36 (20) | 500 | 1200 | 73,410 | 147 |
| Mica | 62 (80) | 38 (20) | 2250 | 7510 | 52,630 | 23 |

The addition of a solid filler to the polyketone polymer inherently results in a viscosity increase in the melt state for the filled compound. Thus, the ratio of melt viscosity after 28 minutes to the initial melt viscosity provides a relative measure of the viscosity increase that occurs when various fillers are added to the polyketone polymer.

The compounds filled with calcium hydroxyapatite demonstrated superior melt stability, based on these rheometric data, relative to the other filled compounds. Only the calcium hydroxyapatite filled compounds gave a viscosity ratio which was less than that of the neat polyketone polymer, indicating stabilization. The viscosity ratios for the compounds filled with calcium carbonate and mica (both commercial fillers) were significantly higher, indicating destabilization in the melt state.

Example 6

Subsequent to blending, specimens of the blends of Example 5 were moulded into plaques on a 25 ton injection moulding machine. Molded specimens were stored over desiccant until testing. Mechanical testing was performed on "dry as moulded" specimens. Results of mechanical testing are shown in Table 5.

The mechanical property data indicate that calcium hydroxyapatite is an acceptable filler for the polyketone polymer, and provides filled compounds with properties which are comparable to those made with common commercial fillers, such as calcium carbonate and mica.

Table 5

| Filler | Polyketone wt% (vol%) | Filler wt% (vol%) | Flexural Modulus (MPa) | Flexural Strength (MPa) | Tensile Strength (MPa) | Elongation (%) | Impact Properties Izod (m.kg/m) | Impact Properties Gardner (cm.kg) |
|---|---|---|---|---|---|---|---|---|
| None | 100 (100) | 0 (0) | 1786 | 63.85 | 62.95 | 86 | 10.51 | 145 |
| Calcium Hydroxy-apatite | 77 (90) | 23 (10) | 2227 | 68.81 | 52.47 | 14 | 7.14 | 7 |
| Calcium Hydroxy-apatite | 60 (80) | 40 (20) | 3916 | 85.30 | 50.19 | 5.1 | 3.21 | 3.5 |
| Calcium Carbonate | 80 (90) | 20 (10) | 2193 | 67.71 | 53.92 | 27 | 5.61 | 47 |
| Calcium Carbonate | 64 (80) | 36 (20) | 2772 | 69.98 | 46.06 | 17 | 3.93 | 22 |
| Mica | 78 (90) | 22 (10) | 3674 | 89.08 | 61.16 | 11 | 5.01 | 9 |
| Mica | 62 (80) | 38 (20) | 5854 | 91.77 | 63.02 | 3.5 | 3.32 | 6 |

Example 7

A portion of polymer A was ground to particles of 0.25 mm, and then powder-mixed with calcium hydroxyapatite and/or zinc aluminate for 5 minutes. Samples containing various concentrations of calcium hydroxyapatite and/or zinc aluminate were prepared, as shown in Table 6. The samples were compounded

in a 19 mm single screw extruder, operating at 60 to 100 rpm with melt temperatures between 230 and 250 °C. The viscosity of each sample was determined over time in the melt in a parallel plate rheometer operated at 275 °C. Table 6 lists the initial melt viscosity and the viscosity after 10 and 28 minutes. During commercial processing, polymers are typically in a melt phase for less than 10 minutes.

Table 6

| Calcium Hydroxyapatite (wt%) | Zinc Aluminate (wt%) | Viscosity (Pa. -sec.) | | |
|---|---|---|---|---|
| | | 0 min | 10 min | 28 min |
| 0 | 0 | 965 | 4820 | 12,500 |
| 0.25 | 0 | 965 | 3437 | 9,000 |
| 0.05 | 0.05 | 965 | 2833 | 8,876 |
| 0.10 | 0.05 | 965 | 3779 | 10,430 |
| 0.05 | 0.10 | 965 | 2781 | 8,361 |
| 0.10 | 0.10 | 965 | 2798 | 9,417 |

The results indicate that a combination of the two stabilizers is generally more effective than calcium hydroxyapatite added alone. Lower concentrations, particularly of calcium hydroxyapatite, appear more effective for the polyketone used in the test, and the compounding method employed. The total wt% of the combined stabilizers is less than 0.25, indicating their effectiveness at low concentrations.

Example 8

The samples described in Example 7 were evaluated in a differential scanning calorimeter (DSC) according to the procedure described in Example 3.

The $HC_2/HC_1$ ratio for each sample is shown in Table 7.

Table 7

| Calcium Hydroxyapatite (wt%) | Zinc Aluminate (wt%) | $HC_2/HC_1$ |
|---|---|---|
| 0 | 0 | .65 |
| 0.25 | 0 | .92 |
| 0.05 | 0.05 | .71 |
| 0.10 | 0.05 | .78 |
| 0.05 | 0.10 | .70 |
| 0.10 | 0.10 | .78 |

The $HC_2/HC_1$ ratios indicate that even small amounts of calcium hydroxyapatite and zinc aluminate (0.05 wt% each) provided a significant increase in the amount of crystallinity maintained during a second heating/cooling cycle. Calcium hydroxyapatite alone appears most effective to maintain crystallinity, but this result was obtained at a higher loading (0.25 wt%) than employed in the other tests (0.10-0.20 wt%).

Example 9

A portion of polymer A was ground to particles of 0.25 mm, and then tumbled overnight in nitrogen with calcium hydroxyapatite and/or zinc aluminate. The viscosity of each sample was determined over time in the melt in a parallel plate rheometer operated at 275 °C. Table 8 lists the initial melt viscosity and the viscosity after 10 and 28 minutes.

Table 8

| Calcium Hydroxyapatite (wt%) | Zinc Aluminate (wt%) | Viscosity (Pa.-sec.) | | |
|---|---|---|---|---|
| | | 0 min | 10 min | 28 min |
| 0 | 0 | 965 | 8678 | 25,330 |
| 1.0 | 0 | 965 | 3681 | 10,570 |
| 0 | 0.1 | 965 | 5926 | 17,620 |
| 0 | 1.0 | 965 | 3036 | 9,532 |
| 0.5 | 0.5 | 965 | 3103 | 8,744 |

The results demonstrate that both calcium hydroxyapatite and zinc aluminate, when individually added to the polyketone polymer, can significantly mitigate the viscosity increase that would otherwise occur. A combination of the two stabilizers is even more effective than either one added individually.

Example 10

A portion of polymer B was ground to particles of 0.25 mm, and then powder-mixed with calcium hydroxyapatite and/or bayerite for 5 minutes. Samples containing various concentrations of calcium hydroxyapatite and/or bayerite were prepared, as shown in Table 9. The samples were compounded in a 19 mm single screw extruder, operating at 60 to 100 RPM with melt temperatures between 230 and 250 °C. The viscosity of each sample was determined over time in the melt in a parallel plate rheometer operated at 275 °C. Table 9 lists the initial melt viscosity and the viscosity after 10 and 28 minutes.

Table 9

| Calcium Hydroxyapatite (wt%) | Bayerite (wt%) | Viscosity (Pa.-sec.) | | |
|---|---|---|---|---|
| | | 0 min | 10 min | 28 min |
| 0 | 0 | 90 | 154 | 1398 |
| 0.5 | 0 | 90 | 90 | 284 |
| 1.0 | 0 | 90 | 90 | 245 |
| 5.0 | 0 | 90 | 90 | 225 |
| 1.0 | 0.5 | 90 | 90 | 214 |

Compared to the neat polyketone, the viscosity of each of the stabilized samples remained relatively constant for at least 10 minutes. After 28 minutes, the viscosity of the polyketone polymer significantly increased, while the viscosity of the stabilized samples was maintained at a much lower level. The combination of calcium hydroxyapatite with bayerite gave the best viscosity control.

Example 11

Example 10 was repeated using polymer C, having a higher LVN. Table 10 lists the initial melt viscosity and the viscosity after 10 and 28 minutes.

Table 10

| Calcium Hydroxyapatite (wt%) | Bayerite (wt%) | Viscosity (Pa.-sec.) | | |
|---|---|---|---|---|
| | | 0 min | 10 min | 28 min |
| 0 | 0 | 419 | 5248 | 30,140 |
| 0 | 0.05 | 419 | 4109 | 23,430 |
| 0 | 0.5 | 419 | 3145 | 18,030 |
| 0.1 | 0 | 419 | 3936 | 22,870 |
| 0.05 | 0.05 | 419 | 3293 | 16,970 |

The results indicate that both stabilizers maintained the viscosity of the samples at a significantly lower level than the polyketone polymer alone. The combination of 0.05 wt% calcium hydroxyapatite and 0.05 wt% bayerite provided viscosity control significantly better than 0.1 wt% calcium hydroxyapatite alone, and significantly better than 0.05 wt% bayerite alone, after 10 minutes. The combination was also more effective than 0.5 wt% bayerite after 28 minutes.

Example 12

The procedure of Example 10 was repeated using polymer A and cupric chromite, or cuprous iodide (for comparison). Table 11 lists the initial melt viscosity and the viscosity after 10 minutes.

Table 11

| Calcium Hydroxyapatite (wt%) | Cupric Chromite (wt%) | Cuprous Iodide (wt%) | Viscosity (Pa.-sec.) | |
|---|---|---|---|---|
| | | | 0 min | 10 min |
| 0 | 0 | 0 | 965 | 4820 |
| 0.004 | 0 | 0 | 800 | 3300 |
| 0.04 | 0 | 0 | 965 | 3600 |
| 0.25 | 0 | 0 | 965 | 3437 |
| 0 | 0.005 | 0 | 1000 | 4900 |
| 0 | 0.05 | 0 | 1000 | 5500 |
| 0.004 | 0.005 | 0 | 800 | 3100 |
| 0.04 | 0.005 | 0 | 857 | 4501 |
| 0.04 | 0.05 | 0 | 965 | 4957 |
| 0.25 | 0.05 | 0 | 700 | 3900 |
| 0 | 0 | 0.006 | 1600 | 8500 |
| 0.004 | 0 | 0.006 | 2000 | 13000 |
| 0.25 | 0 | 0,006 | 800 | 4300 |

The combination of small amounts of calcium hydroxyapatite with cupric chromite (at 0.004 wt% and 0.005 wt%, respectively) provided initial melt viscosity stabilization equivalent to the same amount of calcium hydroxyapatite alone (i.e. 0.004 wt%), and better stabilization after 10 minutes. The sample containing 0.25 wt% calcium hydroxyapatite and 0.05 wt% cupric chromite provided a significant reduction in initial melt viscosity, although the stabilization after 10 minutes was less attractive than some of the other

samples. Even at these high concentrations, the total weight of the stabilizing mixture is only about 0.30 wt%, a relatively low amount for stabilizers.

To compare the examples using cupric chromite with the examples using cuprous iodide, the same amounts on a molar basis, rather than a weight basis, should be used. On a molar basis, the concentration of 0.004 wt% calcium hydroxyapatite and 0.006 wt% cuprous iodide is equivalent to a concentration of 0.004 wt% calcium hydroxyapatite and 0.005 wt% cupric chromite. The results in Table 11 indicate that a combination of calcium hydroxyapatite with cuprous iodide is generally less effective than the combination of calcium hydroxyapatite with cupric chromite.

The Examples above demonstrate that combinations of calcium hydroxyapatite and cupric chromite, when added to the polyketone polymer, can significantly mitigate the viscosity increase that would otherwise occur. Certain combinations of the two stabilizers are even more effective than either one added individually. Some metals, such as copper, often have a detrimental impact on polymer stability. The results obtained with a combination of calcium hydroxyapatite and cupric chromite are unexpected, particularly in view of the results obtained from a combination of calcium hydroxyapatite with cuprous iodide.

Example 13

The samples described in Example 12 were evaluated in a differential scanning calorimeter (DSC) according to the procedure of Example 3. The $HC_2/HC_1$ ratio for each sample is shown in Table 12.

Table 12

| Calcium Hydroxyapatite (wt%) | Cupric Chromite (wt%) | $HC_2/HC_1$ |
|---|---|---|
| 0 | 0 | 0.65 |
| 0.004 | 0 | 0.75 |
| 0.25 | 0 | 0.92 |
| 0.004 | 0.05 | 0.88 |
| 0.25 | 0.05 | 0.89 |

The $HC_2/HC_1$ ratios indicate that combinations of calcium hydroxyapatite and cupric chromite provided a significant increase in the amount of crystallinity maintained during a second heating/cooling cycle, relative to the neat polymer. Calcium hydroxyapatite alone (at 0.25 wt%) was somewhat more effective at maintaining crystallinity.

Example 14

The procedure of Example 10 was repeated using polymer A and 2-mercaptobenzimidazole. Table 13 lists the initial melt viscosity and the viscosity after 10 minutes.

Table 13

| Calcium Hydroxyapatite (wt%) | 2-Mercaptobenzimidazole (wt%) | Viscosity (Pa.-sec.) | |
|---|---|---|---|
| | | 0 min | 10 min |
| 0 | 0 | 900 | 6500 |
| 0.004 | 0 | 800 | 3300 |
| 0.041 | 0 | 800 | 3600 |
| 0.25 | 0 | 965 | 3437 |
| 0 | 0.005 | 1400 | 5400 |
| 0 | 0.045 | 1300 | 7200 |
| 0.004 | 0.005 | 1300 | 6300 |
| 0.041 | 0.045 | 1000 | 6800 |
| 0.25 | 1.00 | 1000 | 24,000 |
| 1.0 | 1.00 | 1100 | 29,000 |

For the combinations, lower concentrations of the calcium hydroxyapatite, of from 0.004 wt% to 0.04 wt%, combined with lower concentrations of 2-mercaptobenzimidazole, of from 0.005 wt% to 0.05 wt%, at about a 1:1 mole ratio, exhibit acceptable processability. The total wt% of the combined stabilizers is less than 0.10, indicating their effectiveness at low concentrations.

Example 15

The samples described in Example 14 were formed into plaques for thermal stability testing. The samples were compression moulded on a 100 ton press operating at 250 °C into sample plaques that were 0.76 mm thick.

The sample plaques were placed in an oven maintained at 125 °C. Periodically, sample plaques were withdrawn and bent across an angle of 180 degrees (i.e. folded in half). When a sample plaque cracked, failure occurred, and the time to embrittlement was determined as a function of time. The results of these oven-aging tests are shown in Table 14.

Table 14

| Calcium Hydroxyapatite (wt%) | 2-Mercaptobenzimidazole (wt%) | Oven Life (Days) |
|---|---|---|
| 0 | 0 | 9 |
| 0.004 | 0 | 9 |
| 0.041 | 0 | 9 |
| 0.25 | 0 | 9 |
| 0 | 0.005 | 9 |
| 0 | 0.045 | 9 |
| 0.004 | 0.005 | 12 |
| 0.041 | 0.045 | 12 |
| 0.25 | 1.00 | 19 |
| 1.0 | 1.0 | 18 |

The data demonstrate that low concentrations of either calcium hydroxyapatite or 2-mercaptobenzimidazole alone have little or no effect on the oven life of the polyketone polymer. However, combinations of the two, particularly at higher concentrations, provided a significant increase in the oven life of the neat polymer.

These oven life results must be balanced against the melt viscosity data. The combinations of lower concentrations of calcium hydroxyapatite (0.004-0.041 wt%) and 2-mercaptobenzimidazole (0.005-0.045 wt%) provided both increased oven life and acceptable melt viscosity.

Example 16

For comparison, polymer A was combined with 2-mercaptobenzimidazole and two other components (not of the invention), phosphorous acid and potassium bromide. Four samples were prepared:

(1) 1.0 wt% 2-mercaptobenzimidazole;
(2) 0.25 wt% phosphorous acid;
(3) 1.0 wt% 2-mercaptobenzimidazole plus 0.25 wt% phosphorous acid; and
(4) 0.25 wt% phosphorous acid plus 1.0 wt% potassium bromide.

When heated, all four samples exhibited severe crosslinking, and could not be analyzed for melt rheology. Consequently, these four additive (combination)s were demonstrated to be unacceptable stabilizers for the polyketone polymer.

The results above demonstrate that calcium hydroxyapatite and 2-mercaptobenzimidazole, when added to the polyketone polymer in combination at low levels, can provide a polymer with a good balance of melt viscosity and oven life.

**Claims**

**Claims for the following Contracting States : AT, BE, CH, LI, DE, DK, FR, GB, GR, IT, LU, NL, SE**

**1.** Polymer composition characterized by comprising a linear alternating polymer of carbon monoxide and at least one ethylenically unsaturated compound, and an additive, wherein the additive is a hydroxyapatite.

2. A composition as claimed in claim 1, characterized in that the polymer has repeating units of the formula

$$-[CO-(CH_2CH_2)]_x-[CO-(G)]_y-$$

wherein G is a moiety of an ethylenically unsaturated hydrocarbon of at least three carbon atoms, polymerised through the ethylenic unsaturation, and $y:x \leqq 0.5$.

3. A composition as claimed in claim 1 or 2, characterized in that the hydroxyapatite is calcium hydroxyapatite $Ca_{10}(PO_4)_6(OH)_2$.

4. A composition as claimed in claims 1, 2 or 3, characterized in that the hydroxyapatite is present in a quantity of 0.01 to 70 wt%, based on total composition.

5. A composition as claimed in claim 4, characterized in that the hydroxyapatite is present as a stabiliser in a quantity of 0.001 to 5 wt%, preferably 0.01-1.0 wt%, based on total composition.

6. A composition as claimed in claim 4, characterized in that the hydroxyapatite is present as a filler in a quantity of 10 to 70 wt%, preferably 30-50 wt%, based on total composition.

7. A composition as claimed in any of claims 1-6, characterized in that it additionally comprises one or more inorganic or organometallic stabilising compounds, which is (are) present in a quantity of 0.001-10 wt%, based on total composition.

8. A composition as claimed in claim 7, characterized in that the additional stabilising compound is zinc aluminate, which is present in a quantity of 0.01-5 wt%, based on total composition.

9. A composition as claimed in claim 7, characterized in that the additional stabilising compound is an alumina hydrogel or an aluminium containing decomposition product thereof, preferably an aluminium trihydroxide such as bayerite, which is present in a quantity of 0.01-10 wt%, based on total composition.

10. A composition as claimed in claim 7, characterized in that the additional stabilising compound is cupric chromite, which is present in a quantity of 0.001-0.5 wt%, based on total composition.

11. A composition as claimed in claim 7, characterized in that the additional stabilising compound is a mercaptobenzimidazole, which is present in a quantity of 0.001-0.1 wt%, based on total composition.

12. Process for the preparation of a composition as defined in claim 1, characterized in that it comprises forming an intimate mixture of a linear alternating polymer of carbon monoxide and at least one ethylenically unsaturated compound with an additive, wherein the additive is a hydroxyapatite.

**Claims for the following Contracting State : ES**

1. Process comprising adding an additive to a linear alternating polymer of carbon monoxide and at least one ethylenically unsaturated compound wherein the additive is a hydroxyapatite.

2. Process as claimed in claim 1, characterized in that the polymer has repeating units of the formula

$$-[CO-(CH_2CH_2)]_x-[CO-(G)]_y-$$

wherein G is a moiety of an ethylenically unsaturated hydrocarbon of at least three carbon atoms, polymerised through the ethylenic unsaturation, and $y:x \leqq 0.5$.

**3.** Process as claimed in claim 1 or 2, characterized in that the hydroxyapatite is calcium hydroxyapatite $Ca_{10}(PO_4)_6(OH)_2$.

**4.** Process as claimed in claims 1, 2 or 3, characterized in that the hydroxyapatite is added in a quantity of 0.01 to 70 wt%, based on total composition.

**5.** Process as claimed in claim 4, characterized in that the hydroxyapatite is added as a stabiliser in a quantity of 0.001 to 5 wt%, preferably 0.01-1.0 wt%, based on total composition.

**6.** Process as claimed in claim 4, characterized in that the hydroxyapatite is added as a filler in a quantity of 10 to 70 wt%, preferably 30-50 wt%, based on total composition.

**7.** Process as claimed in any of claims 1-6, characterized in that additionally is added one or more inorganic or organometallic stabilising compounds, which is (are) present in a quantity of 0.001-10 wt%, based on total composition.

**8.** Process as claimed in claim 7, characterized in that the additional stabilising compound is zinc aluminate, which is added in a quantity of 0.01-5 wt%, based on total composition.

**9.** Process as claimed in claim 7, characterized in that the additional stabilising compound is an alumina hydrogel or an aluminium containing decomposition product thereof, preferably an aluminium trihydroxide such as bayerite, which is present in a quantity of 0.01-10 wt%, based on total composition.

**10.** Process as claimed in claim 7, characterized in that the additional stabilising compound is cupric chromite, which is present in a quantity of 0.001-0.5 wt%, based on total composition.

**11.** Process as claimed in claim 7, characterized in that the additional stabilising compound is a mercaptobenzimidazole, which is present in a quantity of 0.001-0.1 wt%, based on total composition.

**12.** Process for the preparation of a composition as defined in claim 1, characterized in that it comprises forming an intimate mixture.

**Patentansprüche**
**Patentansprüche für folgende Vertragsstaaten : AT, BE, CH, LI, DE, DK, FR, GB, GR, IT, LU, NL, SE**

**1.** Polymerzusammensetzung, dadurch gekennzeichnet, daß sie aus einem linearen alternierenden Polymer aus Kohlenmonoxid und mindestens einer ethylenisch ungesättigten Verbindung sowie einem Zusatzstoff besteht, bei dem es sich um Hydroxyapatit handelt.

**2.** Zusammensetzung nach Anspruch 1, dadurch gekennzeichnet, daß das Polymer sich wiederholende Einheiten der Formel

$$-[-CO-(-CH_2CH_2-)-]_x-[-CO-(-G-)-]_y-$$

aufweist, worin G eine Gruppierung aus einem ethylenisch ungesättigten Kohlenwasserstoff mit mindestens drei Kohlenstoffatomen bedeutet, der mittels der ethylenischen Ungesättigtheit polymerisiert wurde, und $y:x \leqq 0,5$.

**3.** Zusammensetzung nach Anspruch 1 oder 2, dadurch gekennzeichnet, daß es sich bei dem Hydroxyapatit um das Calciumhydroxyapatit $Ca_{10}(PO_4)_6(OH)_2$ handelt.

**4.** Zusammensetzung nach Ansprüchen 1, 2 oder 3, dadurch gekennzeichnet, daß der Hydroxyapatit in einer Menge von 0,01 bis 70 Gew.-%, bezogen auf die Gesamtzusammensetzung, vorliegt.

**5.** Zusammensetzung nach Anspruch 4, dadurch gekennzeichnet, daß der Hydroxyapatit als Stabilisator in einer Menge von 0,001 bis 5 Gew.-%, vorzugsweise 0,01-1,0 Gew.-%, bezogen auf die Gesamtzusammensetzung, vorliegt.

**6.** Zusammensetzung nach Anspruch 4, dadurch gekennzeichnet, daß der Hydroxyapatit als Füllmittel in einer Menge von 10 bis 70 Gew.-%, vorzugsweise 30-50 Gew.-%, bezogen auf die Gesamtzusammensetzung, vorliegt.

**7.** Zusammensetzung nach einem der Ansprüche 1-6, dadurch gekennzeichnet, daß sie zusätzlich eine oder mehrere anorganische oder metallorganische Stabilisierungsverbindungen enthält, die in einer Menge von 0,001-10 Gew.-%, bezogen auf die Gesamtzusammensetzung, vorliegt bzw. vorliegen.

**8.** Zusammensetzung nach Anspruch 7, dadurch gekennzeichnet, daß es sich bei der zusätzlichen Stabilisierungs-verbindung um Zinkaluminat handelt, das in einer Menge von 0,01-5 Gew.-%, bezogen auf die Gesamtzusammensetzung, vorliegt.

**9.** Zusammensetzung nach Anspruch 7, dadurch gekennzeichnet, daß es sich bei der zusätzlichen Stabilisierungsverbindung um ein Hydrogel aus Aluminiumoxid oder um eines seiner aluminiumhaltigen Zersetzungsprodukte, vorzugsweise um ein Aluminiumtrihydroxid wie Bayerit handelt, das in einer Menge von 0,01-10 Gew.-%, bezogen auf die Gesamtzusammensetzung, vorliegt.

**10.** Zusammensetzung nach Anspruch 7, dadurch gekennzeichnet, daß es sich bei der zusätzlichen Stabilisierungsverbindung um Kupfer(II)-chromit handelt, das in einer Menge von 0,001-0,5 Gew.-%, bezogen auf die Gesamtzusammensetzung, vorliegt.

**11.** Zusammensetzung nach Anspruch 7, dadurch gekennzeichnet, daß es sich bei der zusätzlichen Stabilisierungsverbindung um ein Mercaptobenzimidazol handelt, das in einer Menge von 0,001-0,1 Gew.-%, bezogen auf die Gesamtzusammensetzung, vorliegt.

**12.** Verfahren zur Herstellung einer Zusammensetzung wie in Anspruch 1 definiert, dadurch gekennzeichnet, daß man ein inniges Gemisch aus einem linearen alternierenden Polymer aus Kohlenmonoxid und mindestens einer ethylenisch ungesättigten Verbindung mit einem Zusatzstoff herstellt, bei dem es sich um Hydroxyapatit handelt.

**Patentansprüche für folgenden Vertragsstaat : ES**

**1.** Verfahren, bei dem man zu einem linearen alternierenden Polymer aus Kohlenmonoxid und mindestens einer ethylenisch ungesättigten Verbindung einen Zusatzstoff gibt, bei dem es sich um Hydroxyapatit handelt.

**2.** Verfahren nach Anspruch 1, dadurch gekennzeichnet, daß das Polymer sich wiederholende Einheiten der Formel

$$-\!\left[ CO-CH_2CH_2 \right]_x-\!\left[ CO-G \right]_y-$$

aufweist, worin G eine Gruppierung aus einem ethylenisch ungesättigten Kohlenwasserstoff mit mindestens drei Kohlenstoffatomen bedeutet, der mittels der ethylenischen Ungesättigtheit polymerisiert wurde, und $y:x \leqq 0{,}5$.

**3.** Verfahren nach Anspruch 1 oder 2, dadurch gekennzeichnet, daß es sich bei dem Hydroxyapatit um das Calciumhydroxyapatit $Ca_{10}(PO_4)_6(OH)_2$ handelt.

**4.** Verfahren nach Ansprüchen 1, 2 oder 3, dadurch gekennzeichnet, daß der Hydroxyapatit in einer Menge von 0,01 bis 70 Gew.-%, bezogen auf die Gesamtzusammensetzung, zugegeben wird.

**5.** Verfahren nach Anspruch 4, dadurch gekennzeichnet, daß der Hydroxyapatit als Stabilisator in einer Menge von 0,001 bis 5 Gew.-%, vorzugsweise 0,01-1,0 Gew.-%, bezogen auf die Gesamtzusammensetzung, zugegeben wird.

**6.** Verfahren nach Anspruch 4, dadurch gekennzeichnet, daß der Hydroxyapatit als Füllmittel in einer Menge von 10 bis 70 Gew.-%, vorzugsweise 30-50 Gew.-%, bezogen auf die Gesamtzusammensetzung, zugegeben wird.

**7.** Verfahren nach einem der Ansprüche 1-6, dadurch gekennzeichnet, daß zusätzlich eine oder mehrere anorganische oder metallorganische Stabilisierungsverbindungen zugegeben werden, die in einer Menge von 0,001-10 Gew.-%, bezogen auf die Gesamtzusammensetzung, vorliegt bzw. vorliegen.

**8.** Verfahren nach Anspruch 7, dadurch gekennzeichnet, daß es sich bei der zusätzlichen Stabilisierungsverbindung um Zinkaluminat handelt, das in einer Menge von 0,01-5 Gew.-%, bezogen auf die Gesamtzusammensetzung, zugegeben wird.

**9.** Verfahren nach Anspruch 7, dadurch gekennzeichnet, daß es sich bei der zusätzlichen Stabilisierungsverbindung um ein Hydrogel aus Aluminiumoxid oder um eines seiner aluminiumhaltigen Zersetzungsprodukte, vorzugsweise um ein Aluminiumtrihydroxid wie Bayerit handelt, das in einer Menge von 0,01-10 Gew.-%, bezogen auf die Gesamtzusammensetzung, vorliegt.

**10.** Verfahren nach Anspruch 7, dadurch gekennzeichnet, daß es sich bei der zusätzlichen Stabilisierungsverbindung um Kupfer(II)-chromit handelt, das in einer Menge von 0,001-0,5 Gew.-%, bezogen auf die Gesamtzusammensetzung, vorliegt.

**11.** Verfahren nach Anspruch 7, dadurch gekennzeichnet, daß es sich bei der zusätzlichen Stabilisierungsverbindung um ein Mercaptobenzimidazol handelt, das in einer Menge von 0,001-0,1 Gew.-%, bezogen auf die Gesamtzusammensetzung, vorliegt.

**12.** Verfahren zur Herstellung einer wie in Anspruch 1 definierten Zusammensetzung, dadurch gekennzeichnet, daß man ein inniges Gemisch bildet.

**Revendications**

**Revendications pour les Etats contractants suivants : AT, BE, CH, LI, DE, DK, FR, GB, GR, IT, LU, NL, SE**

**1.** Composition de polymère caractérisée en ce qu'elle comprend un polymère linéaire alterné de monoxyde de carbone et d'au moins un composé éthyléniquement insaturé, et un additif, où l'additif est une hydroxy-apatite.

**2.** Une composition selon la revendication 1, caractérisée en ce que le polymère a des mailles de la formule

$$-\left[CO-\left(CH_2-CH_2\right)\right]_x-\left[CO-\left(G\right)\right]_y-$$

dans laquelle G est une portion d'un hydrocarbure éthyléniquement insaturé d'au moins trois atomes de carbone, polymérisée grâce à l'insaturation éthylénique, et y:x est inférieur ou égal à 0,5.

**3.** Une composition selon la revendication 1 ou 2, caractérisée en ce que l'hydroxy-apatite est l'hydroxy-apatite de calcium $Ca_{10}(PO_4)_6(OH)_2$.

**4.** Une composition selon les revendications 1, 2 ou 3, caractérisée en ce que l'hydroxy-apatite est présente dans une quantité de 0,01 à 70 % en poids, par rapport à la composition totale.

**5.** Une composition selon la revendication 4, caractérisée en ce que l'hydroxy-apatite est présente comme stabilisant dans une quantité de 0,001 à 5 % en poids, de préférence de 0,01 à 1,0 % en poids, par rapport à la composition totale.

**6.** Une composition selon la revendication 4, caractérisée en ce que l'hydroxy-apatite est présente comme charge dans une quantité de 10 à 70 % en poids, de préférence de 30 à 50 % en poids, par rapport à la composition totale.

7. Une composition selon l'une quelconque des revendications 1-6, caractérisée en ce qu'elle comprend en outre un ou plusieurs composés stabilisants inorganiques ou organo-métalliques, qui est présent ou sont présents dans une quantité de 0,001 à 10 % en poids, par rapport à la composition totale.

8. Une composition selon la revendication 7, caractérisée en ce que le composé stabilisant supplémentaire est de l'aluminate de zinc, qui est présent dans une quantité de 0,01 à 5 % en poids, par rapport à la composition totale.

9. Une composition selon la revendication 7, caractérisée en ce que le composé stabilisant supplémentaire est un hydrogel d'alumine ou un produit de décomposition de cet hydrogel contenant de l'aluminium, de préférence un trihydroxyde d'aluminium tel que la bayérite, qui est présent dans une quantité de 0,01 à 10 % en poids, par rapport à la composition totale.

10. Une composition selon la revendication 7, caractérisée en ce que le composé stabilisant supplémentaire est du chromite cuivrique, qui est présent dans une quantité de 0,001 à 0,5 % en poids, par rapport à la composition totale.

11. Une composition selon la revendication 7, caractérisée en ce que le composé stabilisant supplémentaire est un mercaptobenzimidazole, qui est présent dans une quantité de 0,001 à 0,1 % en poids, par rapport à la composition totale.

12. Procédé pour la préparation d'une composition telle que définie dans la revendication 1, caractérisé en ce qu'il comprend la formation d'un mélange intime d'un polymère linéaire alterné de monoxyde de carbone et d'au moins un composé éthyléniquement insaturé avec un additif, où l'additif est une hydroxy-apatite.

**Revendications pour l'Etat contractant suivant : ES**

1. Procédé comprenant l'addition d'un additif à un polymère linéaire alterné de monoxyde de carbone et d'au moins un composé éthyléniquement insaturé, où l'additif est une hydroxy-apatite.

2. Procédé selon la revendication 1, caractérisé en ce que le polymère a des mailles de la formule

$$-[CO-(CH_2-CH_2)]_x-[CO-(G)]_y-$$

dans laquelle G est une portion d'un hydrocarbure éthyléniquement insaturé d'au moins trois atomes de carbone, polymérisée grâce à l'insaturation éthylénique, et y:x est inférieur ou égal à 0,5.

3. Procédé selon la revendication 1 ou 2, caractérisé en ce que l'hydroxy-apatite est l'hydroxy-apatite de calcium $Ca_{10}(PO_4)_6(OH)_2$.

4. Procédé selon les revendications 1, 2 ou 3, caractérisé en ce que l'hydroxy-apatite est ajoutée dans une quantité de 0,01 à 70 % en poids, par rapport à la composition totale.

5. Procédé selon la revendication 4, caractérisé en ce que l'hydroxy-apatite est ajoutée comme stabilisant dans une quantité de 0,001 à 5 % en poids, de préférence de 0,01 à 1,0 % en poids, par rapport à la composition totale.

6. Procédé selon la revendication 4, caractérisé en ce que l'hydroxy-apatite est ajoutée comme charge dans une quantité de 10 à 70 % en poids, de préférence de 30 à 50 % en poids, par rapport à la composition totale.

7. Procédé selon l'une quelconque des revendications 1 à 6, caractérisé en ce qu'on ajoute en outre un ou plusieurs composés stabilisants inorganiques ou organo-métalliques, qui est présent ou qui sont présents dans une quantité de 0,001 à 10 % en poids, par rapport à la composition totale.

**8.** Procédé selon la revendication 7, caractérisé en ce que le composé stabilisant supplémentaire est de l'aluminate de zinc, qui est ajouté dans une quantité de 0,01 à 5 % en poids, par rapport à la composition totale.

**9.** Procédé selon la revendication 7, caractérisé en ce que le composé stabilisant supplémentaire est un hydrogel d'alumine ou un produit de décomposition de cet hydrogel contenant de l'aluminium, de préférence un trioxyde d'aluminium tel que la bayérite, qui est présent dans une quantité de 0,01 à 10 % en poids, par rapport à la composition totale.

**10.** Procédé selon la revendication 7, caractérisé en ce que le composé stabilisant supplémentaire est du chromite cuivrique, qui est présent dans une quantité de 0,001 à 0,5 % en poids, par rapport à la composition totale.

**11.** Procédé selon la revendication 7, caractérisé en ce que le composé stabilisant supplémentaire est un mercaptobenzimidazole, qui est présent dans une quantité de 0,001 à 0,1 % en poids, par rapport à la composition totale.

**12.** Procédé pour la préparation d'une composition tel que défini dans la revendication 1, caractérisé en ce qu'il comprend la formation d'un mélange intime.